# EUROPEAN PATENT APPLICATION

(11) **EP 1 249 879 A2**
(43) Date of publication of application: **16.10.2002**
(21) Application number: 01309745.6
(22) Date of filing: 19.11.2001
(51) Int. Cl.: H01M 2/30

(54) **Low profile battery termination**

(30) Priority: 13.04.2001 US 835037
(71) Applicant: WILSON GREATBATCH LTD., Clarence New York 14031 (US)
(72) Inventor: Grubb, Kenneth L., Snyder, New York 14226 (US); Freitag, Gary L., East Aurora, New York 14052 (US)
(74) Representative: Colmer, Stephen Gary

(57) **Abstract**

A means for attaching a thin terminal extension (62) to a glass sealed terminal electrode (20) utilizing the least amount of space and total height. The terminal extension is of sufficient width to allow a hole sized to the diameter of the pin and the pin is received in the opening in the terminal extension. A series of spot welds are made along the perimeter of the pin at the interface with the terminal extension. If necessary, an insulator (60) is placed between the terminal extension and the surface of the battery case to prevent electrical shorting to the case. Hence, the total height of the assembly is the sum of the thickness of the insulator plus the terminal extension. This design can apply to terminations made externally to or internally in the electrochemical cell.

## Description

### BACKGROUND OF THE INVENTION

### 1. Field of the Invention

The present invention relates to the art of electrochemical cells, and more particularly, to a new and improved low profile battery termination. Moreover, the present invention relates to an electrode comprising the low profile termination, and a method of providing the termination and an electrochemical cell incorporating the same.

The low profile termination comprises a thin, conductive strap having an opening which is sized to receive the terminal pin secured therein. The terminal pin extends above the casing lid only far enough to be received in the strap opening. With this construction, the longitudinal axis of the terminal pin is normal to the longitudinal axis of the terminal extension, which, if desired, is of a length sufficient to extend beyond the perimeter of the casing. In some cell configurations, the terminal extension does not extend beyond the casing perimeter. This further limits the cell's external volume. Since volume is a major consideration for implantable devices, developing a useful termination utilizing a minimum volume is of great technical benefit. In still a further embodiment of the present invention, the terminal extension strap is disposed inside the casing for connection between the electrode assembly and the terminal pin.

### 2. Prior Art

The recent rapid development in small-sized electronic devices having various shape and size requirements requires comparably small-sized electrochemical cells of different designs that can be easily manufactured and used in these electronic devices. Preferably, the electrochemical cell has a high energy density, and one commonly used cell configuration is a prismatic, case-negative cell design having an intermediate cathode flanked by opposed anode plates in contact with the casing and in electrical association with the cathode. In conjunction with smaller size batteries enhanced characteristics, such as a low profile battery termination, increase the applicability of these cells to a larger number of situations. The prior art does not disclose a low profile termination that can be used for an internal or external connection of the battery.

Turning now to the prior art patents, U.S. Patent 4,233,372 to Bro et al. discloses a hermetic seal for an electrochemical cell wherein a feed-through pin is sealed with a glass to metal seal within an eyelet. The inner end of pin is enclosed by a metal cap and sealant material is provided between the cap and the glass seal. Accordingly, the termination is not of a low profile, and is disclosed for use only in the inner region of the battery.

U.S. Patent 4,324,847 to Athearn discloses an arrangement wherein a ribbon-like lead of metal or the like is spot welded to an anode current collector which, in turn, is sandwiched or enclosed between the lithium anode plates. The ribbon is not disposed in a plane parallel to the lid, the termination is not of a low profile and it is disclosed for use only in the inner region of the battery.

Also, U.S. Patent 3,421,945 to Michalko discloses a battery in which strips or tabs and are spot welded to the terminal and case, respectively. The disclosed termination if not of a low profile and is for use only in the inner region of the battery.

Finally, U.S. Patent 3,907,602 to Sperandio et al. discloses a self-tightening sealing arrangement for an electrochemical cell wherein the positive electrode is welded to a rivet which is the positive terminal of the cell. The rivet is not a pin received in an opening in the electrode. Furthermore, the lid is of an insulating material and, thus, the overall arrangement is quite different from that contemplated by the current invention.

Thus, it can be seen, based on a reading of the prior art, there is a need to develop an electrode termination of a low profile structure which will extend applicability of the current electrochemical cells to new varieties of applications.

### Summary of the Invention

The present invention provides a means for attaching a thin, conductive terminal extension to a glass sealed terminal pin of an electrochemical cell utilizing the least amount of space and total height. The terminal extension is of sufficient width to include an opening sized to the diameter of the terminal pin received in the opening. A series of spot welds are made along the perimeter of the terminal pin at the interface with the terminal extension. If necessary, an insulator is placed between the terminal extension and the surface of the battery case to prevent electrical shorting to the case. The total height of the assembly is the sum of the thickness of the insulator plus the terminal extension. This design applies to terminations made externally to or internally of the cell.

The foregoing and additional advantages and characterizing features of the present invention will become clearly apparent upon a reading of the following detailed description together with the included drawings.

### Brief Description of the Drawings

Fig. 1A is a perspective view of an electrochemical cell having a low profile terminal extension attached to the terminal pin.
Fig. 1B is a perspective view, with parts broken away, of a current collector connected to the terminal pin and a first embodiment of the terminal extension.
Fig. 1C is a perspective view, with parts broken away, of a current collector connected to the terminal pin and a second embodiment of the terminal extension.
Fig. 2 is a detailed view showing a terminal extension connected to the terminal pin external of the casing.
Fig. 3 is a detailed view showing a terminal extension connected to the terminal pin internal of the casing.
Fig. 4 shows attachment of the terminal extension to the terminal pin by welding.
Fig. 5 is a cross-sectional view along line 5-5 in Fig. 1A depicting the internals of the electrochemical cell.
Fig. 6 shows a jellyroll electrode configuration using the low profile terminal extension.
Figs. 7A and 7B depict various geometric configurations of the metal terminal extension.

### BEST MODE FOR CARRYING OUT THE INVENTION

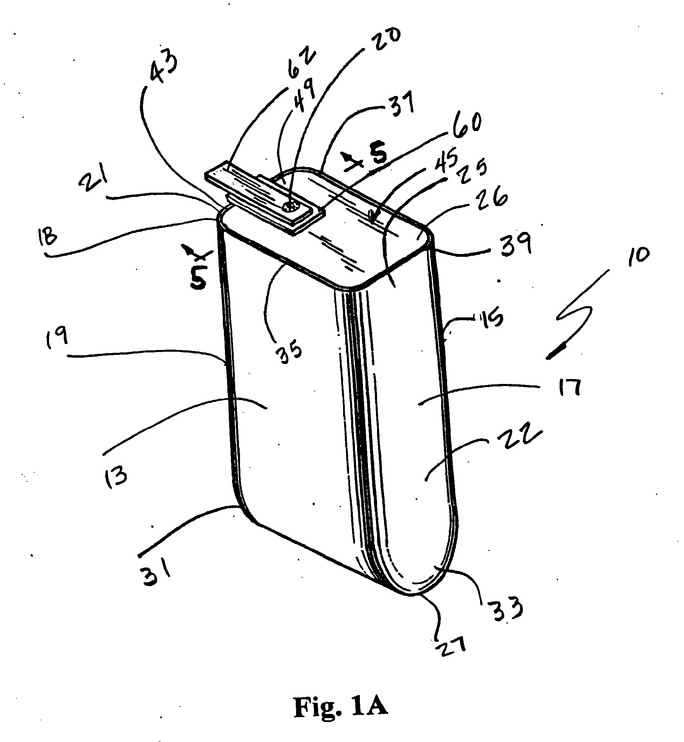

Referring now to Figs. 1A through 5, electrochemical cell 10 is similar to the prismatic electrochemical cell as described in U.S. Patent No. 5,250,373 to Muffoletto et al. This patent is assigned to the assignee of the current invention and the disclosure of which is incorporated herein by reference.

Battery casing 22 in this embodiment consists of two parts, a first part or body 25 and a second part or lid 26 as shown in Figs 1A through 5. In particular, the case 22 is generally rectangular in shape, consisting of spaced apart side walls 13 and 15 extending to and meeting with a first end wall 17 at rounded corners, further extending to and meeting with a second end wall 19 at rounded corners. The side walls 13 and 15, and end walls 17 and 19 extend to a continuous upper edge 21 defining an opening 18 of the body 25 opposite to the lower end. Side walls 13 and 15 further extend down and meet forming a smooth arcuate surface 27. End walls 17 and 19 further extend downward and meet arcuate surface 27 with rounded ends 31 and 33.

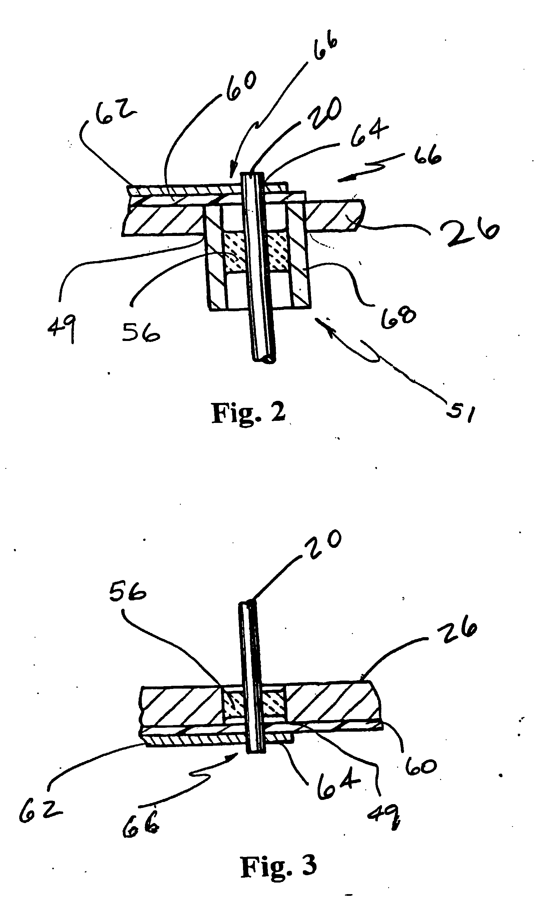

The lid 26 is a one piece member having spaced apart side walls 35 and 37 extending to and meeting with first end wall 39 at rounded corners, further extending to and meeting with a second end wall 43 with rounded corners. Side walls 35 and 37 and end walls 39 and 43 extend to and meet with upper surface 45, and further extend to and meet with lower surface 47. The lid 26 is sized just to fit within the upper opening 18 in the case body 25. The lid 26 is provided with an opening 49, used for a hermetically sealed battery terminal feedthrough 51, containing a terminal lead 20 insulated from the lid 26 by a glass-to-metal seal 56 (Figs. 3 to 5). The terminal lead will be described in detail later.

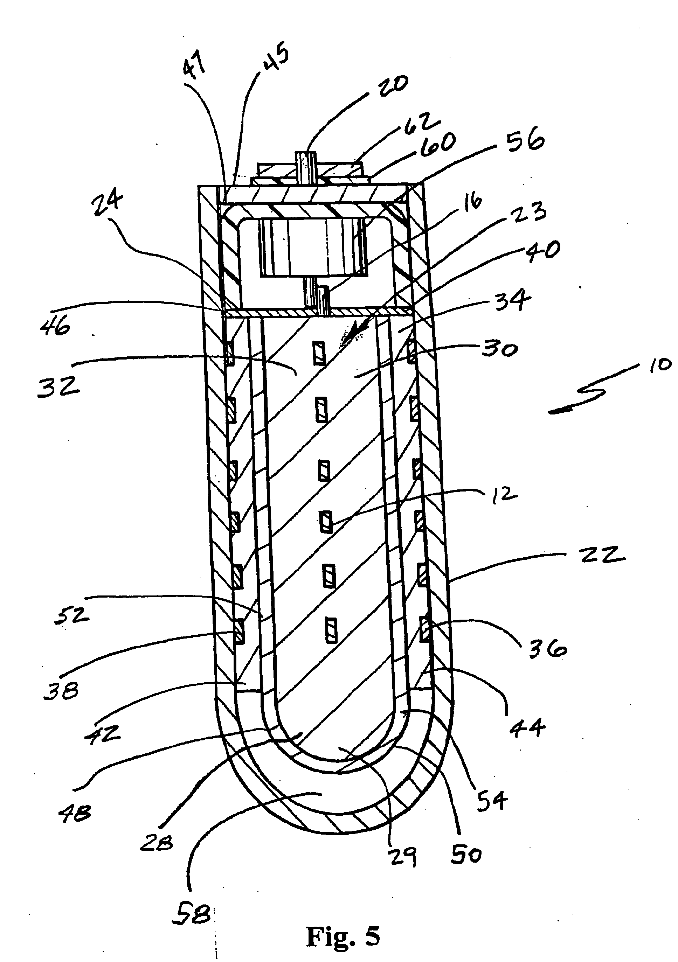

The lid 26 is received inside the opening 18 of the body 25 and welded to provide hermetic enclosure for an electrode assembly 23 (Fig. 5). The preferred methods of sealing the casing are welding and brazing. Casing 22 is of a conductive material preferably selected from the group consisting of nickel, aluminum, stainless steel, mild steel and titanium. An external cell electrical connection is provided by a terminal lead 20 and by a contact region comprising the lid 26 or the entire conductive casing 22, which is insulated from the terminal lead 20, to prevent shorting.

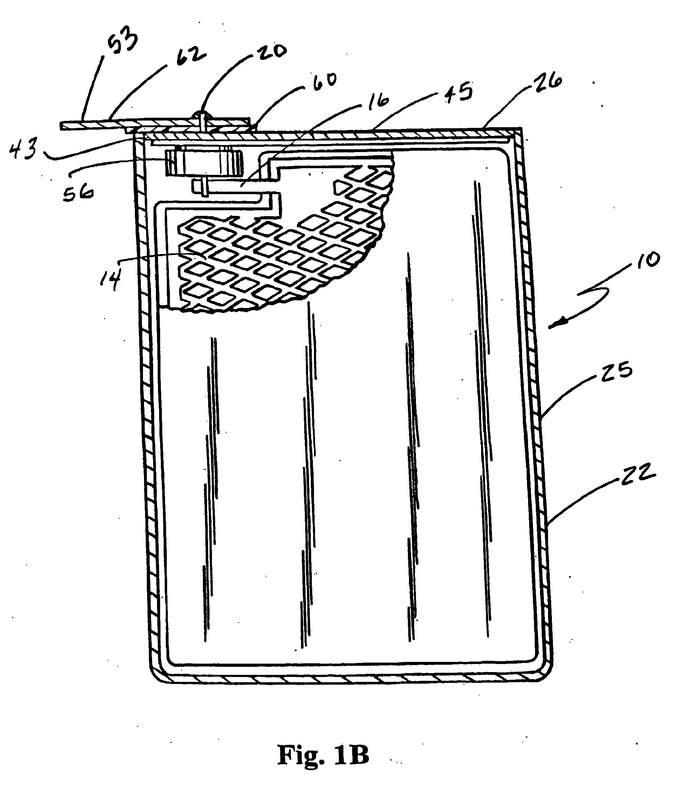

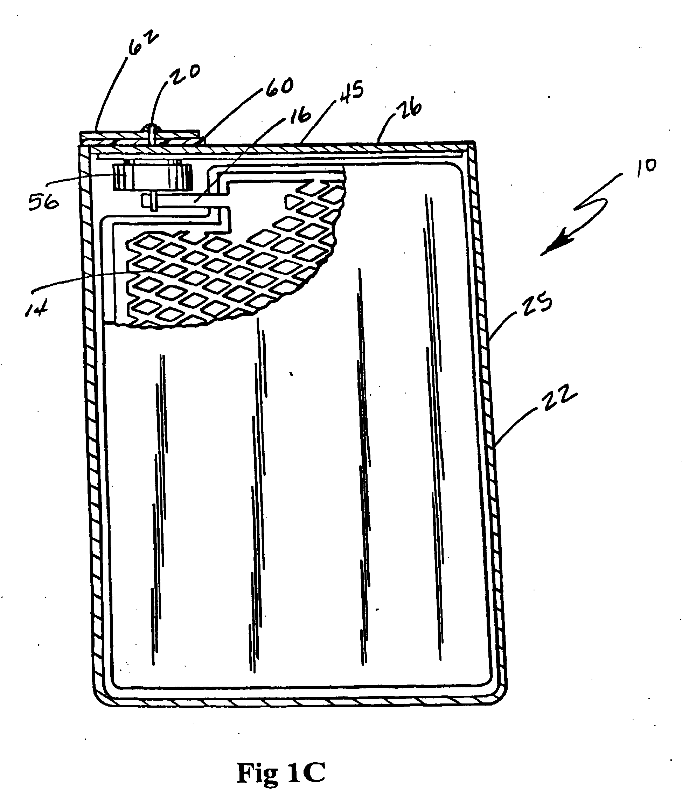

Now, Figs. 1B and 1C show embodiments of the terminal extension 62. Fig. 1B shows the terminal extension 62 extending past the end wall 43, creating an extension 53 which is outside of the periphery of the main body 25 of the battery. The terminal extension is generally flat and parallel to the surface 45 of the lid. In contrast, Fig. 1C depicts a second embodiment of the terminal extension 62 totally contained within the periphery of the top surface 45 of the lid 26.

The terminal lead 20 may have both a low profile (Fig. 2) and a high profile (Fig. 3). The profile is defined as the height of the extension of the terminal lead above the surface 45 of the case lid 26. A low profile termination is defined as the use of a terminal extension 62 in conjunction with a terminal pin 20, in which the height of the terminal pin above the upper surface 45 of the lid 26 or below the lower surface of the lid 47 is about the thickness of the terminal extension 62 plus the thickness of the insulator 60, if used. Thus as shown in Fig. 2, the low profile termination 66, can be used for an external connection, whereas, Fig. 3 demonstrates the low profile termination 66 for an internal connection.

Fig. 2 shows one embodiment of an external connection using a ferrule 68 in conjunction with a low profile connection 66. The lid 26 is shown with an opening 49 in which a ferrule 68 is placed in a closely spaced relationship and sealed to the lid 26. Terminal pin 20 is inserted inside of the ferrule 68, parallel to the walls of the ferrule 68. Terminal pin 20 is sealed within the ferrule 68 by placing glass having a moderate melting point within the ferrule 68, inserting the pin 20 into the glass and finishing by heating and subsequent cooling creating a glass-to-metal seal 56. The second portion of the terminal pin is connected to current collector 12 (Fig. 5).

As further shown in Fig. 2, a thin metal terminal extension 62 is attached to the first part of terminal lead 20. A terminal extension is defined as a thin piece of metal of sufficient thickness as to conduct a designed flow of current to an external load such as an implantable device. The terminal extension 62 is sufficiently large to allow an opening 64 sized about the same or slightly larger than the terminal lead 20. The lead 20 is received in the opening 64 of the metal terminal extension 62. The preferred metal for the terminal extension 62 is nickel, although others may be satisfactory.

Fig. 3 shows an embodiment of a high profile external lead 20. In Fig. 3, the lid 26 has an opening 49 in which terminal lead 20 is sealed within the lid 26 by use of a glass-to-metal seal 56. The height of the terminal pin 20 above the surface 45 of the lid 26 is in excess of the thickness of the terminal extension 62 and insulator 60, if used. However, the length of the pin 20 below the lower surface 47 of the lid 26 can be necessarily limited to the thickness of the terminal extension 62 plus the thickness of the insulator 60, if used. The terminal extension 62 is connected to the cathode current collector 12. As those skilled in the art can realize, it is not necessary to use a ferrule 68 with the terminal pin 20; the design of the battery may dictate that other types of terminations are required. For example, a termination using a thicker lid, or perhaps using a header assembly (not shown) containing both a terminal lead and battery fill opening and seal (not shown).

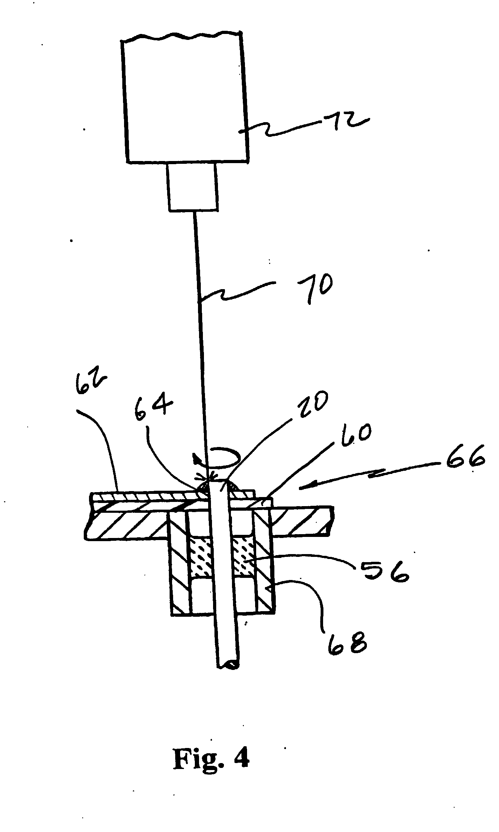

As shown in Fig. 4, the terminal extension 62 is attached to the terminal pin 20 by welding, using a laser beam 70 from a welding source 72.

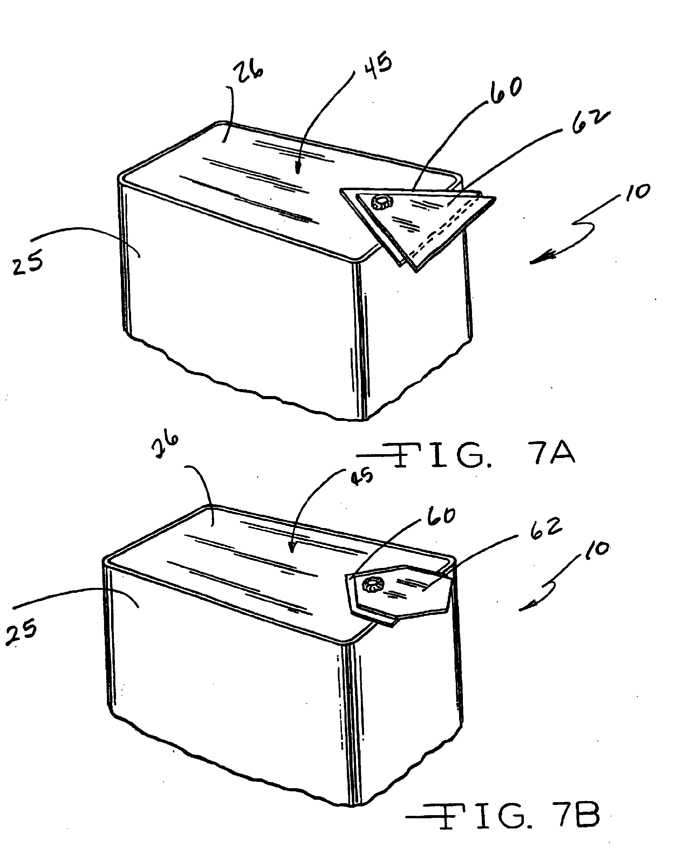

Also, it is not necessary that the metal terminal extension 62 be flat, or parallel to the upper and lower surfaces 45 and 47 of the lid 26. It can take a number of shapes including strap, cylindrical or a multitude of other geometric shapes and locations (Figs. 7A and 7B). All that is necessary is that the terminal extension have an opening 64 to receive the terminal lead 20 and be secured thereto.

As shown in Figs. 1B through 5, the cell 10 further includes anode and cathode electrodes. The cathode 29 includes current collector 12. Current collector 12 generally comprises a grid 14 and a connection tab 16. As previously stated the terminal lead 20 is directly contacted to the connection tab 16 of the current collector 12, preferably by welding, to provide for direct electrical connection to the cathode electrode. The current collector 12 is readily incorporated into alkali metal/solid cathode or alkali metal/oxyhalide electrochemical cells of both solid cathode and liquid electrolyte types. In the solid cathode type, for example a lithium-solid cathode cell, a solid cathode material such as silver vanadium oxide or copper silver vanadium oxide is contacted to the current collector 12 and surrounded by a separator. The anode 24 is preferably of lithium.

In the liquid cathode/electrolyte or catholyte type cell, for example a lithium-oxyhalide cell, liquid catholyte fills the casing interior and is in operative contact with the anode and the cathode current collector 12 sandwiched between opposed carbonaceous plates. A separator is disposed between the anode and the carbonaceous cathode. For a more detailed description of such a liquid electrolyte cell references may be made to U.S. Patent No. 4,246,327 to Skarstad et al., which is assigned to the assignee of the present invention, the disclosure of which is hereby incorporated by reference.

Referring now to Fig. 5, the cell 10 according to this embodiment of the present invention is of the liquid electrolyte type comprising a cathode electrode having a body 28 of solid cathode material in the form of plates 30, 32 pressed together and bonded against the cathode current collector 12. The cathode active material is preferably comprised of a metal, a metal oxide, a mixed metal oxide or a metal sulfide, and the cathode current collector 12 is fabricated from a thin sheet of metal selected from the group consisting of nickel, aluminum, stainless steel, mild steel and titanium, with titanium being preferred.

As further shown in Fig. 5, cell 10 includes an alkali metal anode electrode, generally designated 24, comprising a unitary, conductive member which serves as the anode current collector and is fabricated from a thin sheet of metal, preferably nickel, having a pair of wing-like sections 36 and 38 joined by an intermediate web section 40. Lithium anode elements 42 and 44 are in pressure bonded contact with and carried by corresponding ones of the electrode wing sections 36 and 38, respectively. The wing-like sections 36 and 38 are of mesh formation to facilitate adherence to the lithium anode elements 42, 44. The lithium anode elements 42 and 44 are of similar shape or configuration as the corresponding electrode wing sections 36 and 38, respectively, but of a slightly larger size or surface area so as to define a marginal or peripheral extension or border surrounding the perimeter of each wing section. Thus, the length and width of each of the lithium anode elements 42 and 44 is slightly greater than the length and width of the corresponding electrode wing section 36 and 38 with the anode elements terminating at an edge 46 a short distance from electrode web section 40.

To construct an anode-cathode subassembly according to the present invention, the electrode wing sections 36, 38 with the associated anode lithium elements 42, 44 are folded relative to web section 40 and toward each other and in a manner to place the lithium anode elements 42, 44 in operative contact with the oppositely directed surfaces 48 and 50 of the cathode body 28. In particular, lithium anode element 42 is in operative contact with the cathode body surface 32 through a thin sheet of separator material 52. Similarly, lithium anode element 44 is in operative contact with cathode body surface 50 through a thin sheet of separator material 54 such that separator sheets 52 and 54 surround and envelope the cathode body 28 to prevent direct physical contact with the anode plates 42, 44. Shielding and insulating sheets (not shown) are also provided between the web section 40 of the anode current collector and the cathode electrode 29. The terminal lead 20 connected to the current collector 12 of the cathode electrode 29 extends through a header assembly comprising the glass-to-metal seal 56 fitted in the lid 26.

Cell 10 is completed by a liquid electrolyte 58 provided in casing 22 and sealed therein by the provision of the closure means sealed (not shown) to hermetically close the cell 10. Lead 20 is the positive electrical terminal, being connected to the cathode body 14. With anode electrode 24 being in operative contact with the conducting casing 22 through the web section 40 of the anode current collector in electrical contact therewith, the cell 10 of this embodiment of the present invention is in a case-negative electrical configuration.

By way of example, in an illustrative cell, the active material of cathode body 28 is a silver vanadium oxide cathode material as described in U.S. Patent Nos. 4,310,609 and 4,391,729 to Liang et al., or copper silver vanadium oxide as described in U.S. Patent Nos. 5,472,810 and 5,516,340 to Takeuchi et al., all assigned to the assignee of the present invention, the disclosures of which are hereby incorporated by reference. Cathode current collector 12 is of titanium and terminal lead 20 is of molybdenum, separators 52, 54 are of polypropylene, electrolyte 58 is a 1.0M to 1.4M solution of LiAsF₆ or LiPF₆ in a 50:50 mixture of, by volume, 1,2-dimethoxyethane and propylene carbonate, glass seal 56 is of TA-23 Hermetic sealing glass, and closure means (not shown) is of stainless steel.

The current collector 12 of the present invention can also be employed in a cell having a case-positive electrical configuration. In particular, in the embodiments of Figs. 1A thru 5, with the lithium anode elements 42, 44 contacting the conductive cell casing 22, the cell 10 is in a case-negative electrical configuration. A case-positive electrical configuration is provided by placing the cathode parts in contact with the conductive cell casing 22. In particular, and referring to the anode-cathode subassembly of Fig. 5, a case-positive electrical configuration is provided by replacing lithium anode elements 42, 44 with cathode plates 30, 32 on the electrode wing sections 36, 38. Accordingly, cathode body 28 would be replaced by a pair of lithium anode elements 42, 44 sandwiched together and against the current collector 12 of the present invention serving as an anode current collector which, in turn, is connected to the terminal lead 20 via electrical contact to connection tab 16 and insulated from lid 26 by the glass-to-metal seal 56. With the cathode parts in contact with electrode wing sections 36, 38 and with the electrode web section 40 in contact with the cell casing 22, a cell is provided in a case-positive electrical configuration. In all other respects, the anode current collector in the case-positive configuration is similar to that previously described with respect to cell 10 having the case-negative configuration.

In the current invention, the low profile termination has been discussed in conjunction with a prismatic casing having a bottom wall and an upper lid or cover. However, this is for illustrative purposes only. As those who are skilled in the art can realize, the low profile termination is useful with any casing design which allows access to the external or internal surface of the terminal lead, depending on the design needed. The available designs include clam shell, prismatic, cylindrical, on button shapes. It may also be used with a number of different types of batteries including primary lithium batteries, implantable batteries, lithium based rechargeable cells and also acid or alkaline based batteries.

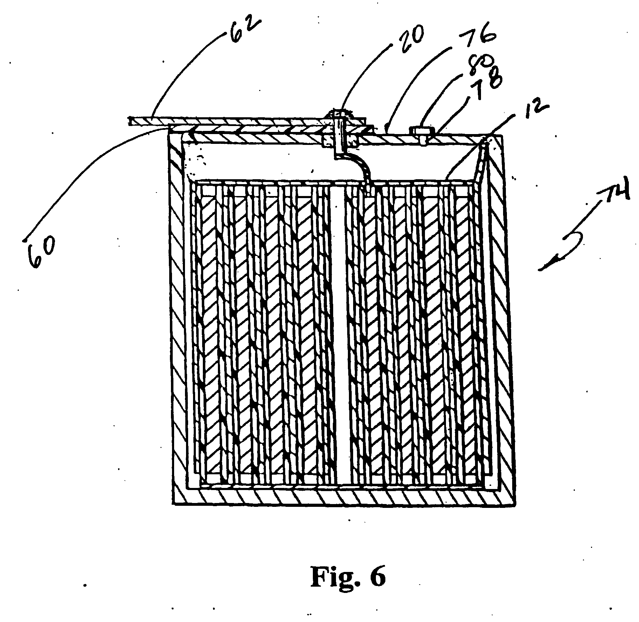

As shown in Fig. 6, it will become apparent to those skilled in the art that electrical association of the anode and cathode electrodes need not be restricted to a prismatic configuration, but also applies to a jellyroll configuration. Fig. 6 shows a jellyroll battery configuration 74 using the terminal extension 62, which may or may not require an insulator 60, depending on the application. The battery contains current collector 12 attached to terminal pin 20 extending above the top surface 76 of the battery 74. The battery further contains a fill opening 78 sealed by plug 80. In this embodiment, the low profile connection may be contained within the periphery of the top surface 76 of the battery or may extend external to limits of the top surface 76. The terminal extension 62 can also be used for an internal connection of the terminal pin 20 to the current collector 12 (not shown) or for an external connection as shown per Fig. 6.

Now, it is therefore apparent that the present invention accomplishes its intended objects. While embodiments of the present invention have been described in detail, that is for the purpose of illustration, not limitation.

## Claims

1. An electrochemical cell comprising:
(a) a casing of electrically conductive material having an open end;
(b) a first and second electrode having a separator means disposed therebetween inside the casing in electrical association with each other, wherein at least one of the electrodes includes a current collector;
(c) an electrolyte activating the first and second electrodes;
(d) a lid of electrically conductive material closing the open end of the casing; and
(e) a terminal lead, said lead having a first end disposed inside the casing adapted to be connected to the current collector and a second end adapted to be connected to a load, wherein the terminal lead extends through an opening in the lid, said terminal lead further includes an extension containing an extension opening, wherein the terminal lead is received in the extension opening.

2. The electrochemical cell of claim 1, wherein the extension protrudes beyond a periphery of a surface of the lid.

3. The electrochemical cell of claim 1 or 2 wherein a longitudinal axis of the terminal lead is perpendicular to a planar outer surface of the lid.

4. The electrochemical cell of claim 1, 2 or 3, wherein the terminal extension is contained within a periphery of a surface of the lid.

5. The electrochemical cell of any preceding claim, wherein said extension is attached to the terminal pin external to the casing.

6. The electrochemical cell of any preceding claim 1 to 4, wherein said extension is attached to the terminal pin as an internal cell connection.

7. The electrochemical cell of any preceding claim, further including an insulator, said insulator isolates said extension from the case.

8. The electrochemical cell of any preceding claim, wherein the casing is selected from the group consisting of a cylindrical casing, a prismatic casing, a clam shell casing, and a button shape casing.

9. The electrochemical cell of any preceding claim, wherein the extension is made of nickel.

10. The electrochemical cell of any preceding claim, wherein the extension is attached to the terminal lead by welding.

11. The electrochemical cell of any preceding claim, wherein the extension is selected from the group consisting of a strap, triangular and hexagonal geometric shapes.

12. The electrochemical cell of any preceding claim, wherein the first and second electrodes are electrically associated in either a jellyroll configuration or in a prismatic configuration.

13. A method of providing an electrochemical cell, comprising the steps of:
(a) providing a casing of electrically conductive material having an open end;
(b) providing a first and second electrode having a separator means disposed therebetween inside the casing in electrical association with each other, and further including providing at least one of the electrodes having a current collector;
(c) providing an electrolyte activating the first and second electrodes;
(d) providing a lid of electrically conductive material having an opening therein, the lid closing the open end of the casing; and
(e) providing a terminal lead, said lead having a first end disposed inside the casing adapted to be attached to a current collector, and a second end adapted to be connected to a load, wherein the terminal lead extends through the opening in the lid, said terminal lead further including an extension, said extension containing an extension opening receiving the terminal lead.

14. The method according to claim 13 wherein the cell is further defined in any of claims 2 to 12.

15. The method of claim 13 or 14 except when appendant to claim 6, including furnishing the terminal lead in an external low profile connection.

16. The method of claim 13 or 14 except when appendant to claim 5, including installing the terminal lead in an internal low profile connection.
